# EUROPÄISCHE PATENTSCHRIFT

(11) **EP 0 713 802 B1**
(45) Veröffentlichungstag und Bekanntmachung des Hinweises auf die Patenterteilung: **19.05.1999**
(21) Anmeldenummer: 95118235.1
(22) Anmeldetag: 20.11.1995
(51) Int. Cl.: B60Q 1/14

(54) **Vorrichtung zum selbsttätigen Einschalten der Beleuchtung eines Kraftfahrzeuges**
Automatic lighting control device for vehicle
Dispositif d'éclairage automatique pour véhicule

(30) Priorität: 26.11.1994 DE 9419018 U
(43) Veröffentlichungstag der Anmeldung: 29.05.1996
(73) Patentinhaber: Hoffmann, Ewald, 54675 Kruchten (DE)
(72) Erfinder: Hoffmann, Ewald, 54675 Kruchten (DE)
(74) Vertreter: Serwe, Karl-Heinz, Dipl.-Ing.

(56) Entgegenhaltungen:
- EP-A- 0 151 286
- DE-A- 3 447 846
- DE-U- 8 520 564
- FR-A- 2 209 339
- GB-A- 2 275 329
- US-A- 5 416 313

## Beschreibung

Die Erfindung betrifft eine Vorrichtung zum selbsttätigen Einschalten der Beleuchtung eines Kraftfahrzeuges bei Unterschreiten eines vorgegebenen Helligkeitswertes, wobei ein Lichtsensor, der wirksam mit einem Lichtschalter des Kraftfahrzeuges verbunden ist, in einem Spiegel des Kraftfahrzeuges angeordnet ist.

Zahlreiche Unfälle werden darauf zurückgeführt, daß die Fahrzeugführer nicht rechtzeitig bei Dämmerungseinbruch oder schlechten Sichtverhältnissen die Beleuchtung des Kraftfahrzeuges einschalten.

Aus dem DE-U-8520564 ist eine ähnliche Vorrichtung zum selbsttätigen Einschalten der Beleuchtung eines Kraftfahrzeuges bekannt, bei der ein Lichtsensor in der zur Frontscheibe gerichteten Seite des Innenspiegels vorgesehen ist. Nachteilig ist bei dieser Anordnung jedoch, daß bei über den Lichtsensor eingeschalteter Kfz-Beleuchtung ein Ausschalten erfolgt, wenn z.B. der Lichtsensor von Scheinwerfern entgegenkommender Fahrzeuge beleuchtet wird.

Es wird daher vorgeschlagen, den Lichtsensor in einem Außenspiegel anzuordnen, wobei der Lichtsensor nach unten gerichtet ist. Diese Anordnung des Lichtsensors gewährleistet eine möglichst geringe Störung durch Fremdlicht.

Vorteilhaft ist der Lichtsensor in der Unterseite des Außenspiegels angeordnet.

Vorzugsweise ist der Lichtsensor im Innern einer, mit ihrer Längsrichtung nach unten gerichteten Hülse angeordnet. Vorzugsweise ist die Hülse mit ihrer Längsrichtung lotrecht verlaufend im Außenspiegel angeordnet. Bei einer weiteren vorteilhaften Ausführungsform ist die Hülse mit ihrer Längsrichtung in einem Winkel von ca. 20° zur Lotrechten vom Kraftfahrzeug wegweisend im Außenspiegel angeordnet.

Der Lichtsensor ist vorzugweise in der Hülse verschiebbar und festlegbar angeordnet. Vorzugsweise hat die Hülse eine Länge von ca. 40 mm. Vorteilhaft hat die Hülse einen Durchmesser von ca. 15 mm.

Die untere Öffnung der Hülse bzw. die untere Seite des Lichtsensors ist vorzugsweise durch eine Polarisationsfolie abgedeckt, die in Hülsenlängsrichtung polarisiert ist.

Vorzugsweise ist die untere Öffnung der Hülse bzw. die untere Seite des Lichtsensors durch ein Sichtfenster abgedeckt.

Vorzugsweise ist das Sichtfenster einstückig als Klipphalterung zum Einsetzen in den Außenspiegel ausgebildet.

Die Erfindung ist in den Zeichnungen beispielhaft dargestellt. Es zeigen:
- Fig. 1: einen Außenspiegel mit einem eingesetzten Lichtsensor in teilweisem Schnitt und
- Fig. 2: einen Lichtsensor im Schnitt.

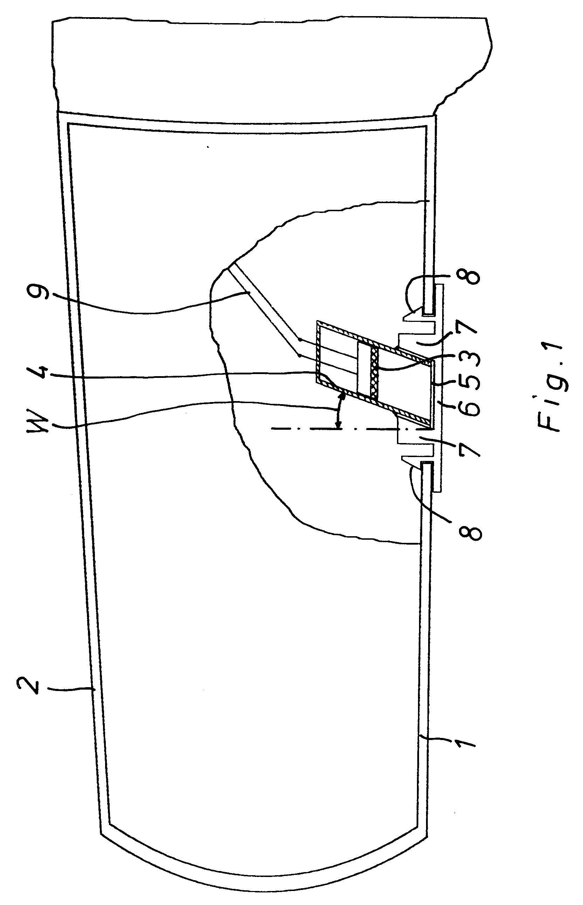

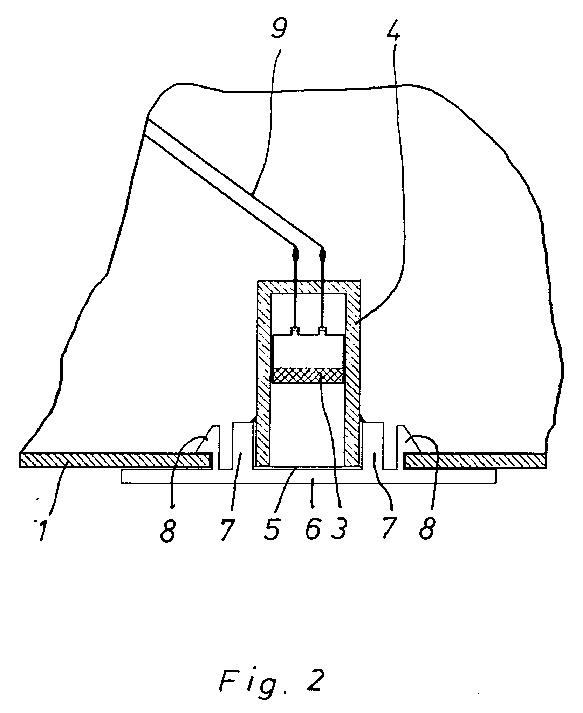

Nach den Fig. 1 und 2 ist in der Unterseite 1 eines Außenspiegels 2 eines nicht dargestellten Kraftfahrzeuges ein nach unten gerichteter Lichtsensor 3 angeordnet.

Der Lichtsensor sitzt in einer Hülse 4 mit einer Länge von ca. 40 mm und einem Durchmesser von ca 15 mm. Der Lichtsensor 3 ist in der Hülse 4 verschiebbar und festlegbar angeordnet.

Wie die Fig. 1 und 2 zeigen, verläuft die Hülse 4 mit ihrer Längsrichtung in lotrechter Richtung (Fig. 2) oder in einem Winkel W von ca. 20° zur Lotrechten, vom Fahrzeug wegweisend zum Boden (Fig. 1).

Die Figuren zeigen weiter, daß die untere Öffnung der Hülse 4 durch eine Polarisationsfolie 5 abgedeckt, die in Hülsenlängsrichtung polarisiert ist. Weiterhin ist die untere Öffnung der Hülse 4 durch ein Sichtfenster 6 abgedeckt, das einstückig als Halterung 7 für die Hülse 4 und mit Halteklipps 8 zum Einsetzen in die Unterseite 1 des Außenspiegels 2 ausgebildet ist.

Durch elektrische Verbindungsleitungen 9 ist der Lichtsensor 3 wirksam mit der nicht dargestellten Lichtschaltanlage des Kraftfahrzeuges verbunden.

Wird eine vorgegebene, einstellbare Helligkeit unterschritten, so schaltet der Lichtsensor über die Lichtschaltanlage des Kraftfahrzeuges die Beleuchtung des Kraftfahrzeuges ein. Das Ausschalten der Beleuchtung kann enweder von Hand an der Lichtschaltanlage des Kraftfahrzeuges oder über den Lichtsensor gesteuert mit einer geeigneten Verzögerung erfolgen.

Die Anordnung des Lichtsensors in der Unterseite des Außenspiegels gewährleistet eine möglichst geringe Störung des Lichtsensors durch Fremdlicht.

Durch die Polarisationsfolie wird gewährleitet, daß nur Lichtstrahlen in Längsrichtung der Hülse einfallen können, da die im Winkel auftreffenden Lichtstrahlen abgelenkt werden.

Die Anordnung des Lichtsensors in der Unterseite des Außenspiegels stellt außerdem sicher, daß der Lichtsensor nur wenig verschmutzt wird, so daß die Vorrichtung lange Zeit betriebssicher ist. Eine Höhe von ca. 80 cm über dem Erdboden hat die besten Ergebnisse für die Wirkungsweise des Lichtsensors ergeben.

## Patentansprüche

1. Vorrichtung zum selbsttätigen Einschalten der Beleuchtung eines Kraftfahrzeuges bei Unterschreiten eines vorgegebenen Helligkeitswertes, wobei ein Lichtsensor (3), der wirksam mit einem Lichtschalter des Kraftfahrzeuges verbunden ist, in einem Spiegel (2) des Kraftfahrzeuges angeordnet ist, dadurch gekennzeichnet, daß der Lichtsensor in einem Außenspiegel angeordnet ist und der Lichtsensor nach unten gerichtet ist.

2. Vorrichtung nach Anspruch 1, dadurch gekennzeichnet, daß der Lichtsensor (3) in der Unterseite (1) des Außenspiegels (2) angeordnet ist.

3. Vorrichtung nach einem der Ansprüche 1 oder 2, dadurch gekennzeichnet, daß der Lichtsensor (3) im Innern einer, mit ihrer Längsrichtung nach unten gerichteten Hülse (4) angeordnet ist.

4. Vorrichtung nach Anspruch 3, dadurch gekennzeichnet, daß die Hülse (4) mit ihrer Längsrichtung Lotrecht verlaufend im Außenspiegel (2) angeordnet ist.

5. Vorrichtung nach Anspruch 3, dadurch gekennzeichnet, daß die Hülse (4) mit ihrer Längsrichtung in einem Winkel (W) von ca. 20° zur Lotrechten vom Kraftfahrzeug wegweisend im Außenspiegel (2) angeordnet ist.

6. Vorrichtung nach einem der Ansprüche 3 bis 5, dadurch gekennzeichnet, daß der Lichtsensor (3) in der Hülse (4) verschiebbar und festlegbar angeordnet ist.

7. Vorrichtung nach einem der Ansprüche 3 bis 6, dadurch gekennzeichnet daß die Hülse (4) eine Länge von ca. 40 mm hat.

8. Vorrichtung nach einem der Ansprüche 3 bis 7, dadurch gekennzeichnet, daß die Hülse einen Durchmesser von ca. 15 mm hat.

9. Vorrichtung nach einem der Ansprüche 1 bis 8, dadurch gekennzeichnet, daß die untere Öffnung der Hülse (4) bzw. die untere Seite des Lichtsensors (3) durch eine Polarisationsfolie (5) abgedeckt ist, die in Hülsenlängsrichtung polarisiert ist.

10. Vorrichtung nach einem der Ansprüche 1 bis 9, dadurch gekennzeichnet, daß die untere Öffnung der Hülle (4) bzw. die untere Seite des Lichtsensors (3) durch ein Sichtfenster (6) abgedeckt ist.

11. Vorrichtung nach Anspruch 10, dadurch gekennzeichnet, daß das Sichtfenster (6) einstückig als Klipphalterung zum Einsetzen in den Außenspiegel (2) ausgebildet ist.

## Claims

1. A device for automatically switching on the lights of a motor vehicle when the light intensity falls below a predetermined value, wherein a light sensor (3), which is actively connected to a light switch of the motor vehicle, is disposed in a mirror (2) of the motor vehicle, characterised in that the light sensor is disposed in an exterior mirror and the light sensor is directed downwards.

2. A device according to claim 1, characterised in that the light sensor (3) is disposed in the underside (1) of the exterior mirror (2).

3. A device according to either one of claims 1 or 2, characterised in that the light sensor (3) is disposed in the interior of a sleeve (4), the longitudinal direction of which is oriented downwards.

4. A device according to claim 3, characterised in that the sleeve (4) is disposed in the exterior mirror (2) with its longitudinal direction extending vertically.

5. A device according to claim 3, characterised in that the sleeve (4) is disposed in the exterior mirror (2) with its longitudinal direction pointing away from the motor vehicle at an angle (W) of about 20° to the vertical.

6. A device according to any one of claims 3 to 5, characterised in that the light sensor (3) is displaceably and fixably disposed in the sleeve (4).

7. A device according to any one of claims 3 to 6, characterised in that the sleeve (4) has a length of about 40 mm.

8. A device according to any one of claims 3 to 7, characterised in that the sleeve has a diameter of about 15 mm.

9. A device according to any one of claims 1 to 8, characterised in that the bottom opening of the sleeve (4) of the underside of the light sensor (3) is covered by a polarising film (5) which is polarised in the longitudinal direction of the sleeve.

10. A device according to any one of claims 1 to 9, characterised in that the bottom opening of the sleeve (4) or the underside of the light sensor (3) is covered by a window (6).

11. A device according to claim 10, characterised in that the window (6) is constructed in one piece as a clip-on mounting for insertion in the exterior mirror (2).

## Revendications

1. Dispositif pour le branchement automatique de l'éclairage d'un véhicule automobile dans le cas où la luminosité tombe au-dessous d'une valeur prédéterminée, dans lequel un capteur de lumière (3), qui est relié d'une manière active à un commutateur d'éclairage du véhicule automobile, est disposé dans un miroir (2) du véhicule automobile, caractérisé en ce que le capteur de lumière est disposé dans un rétroviseur extérieur et le capteur de lumière est dirigé vers le bas.

2. Dispositif selon la revendication 1, caractérisé en ce que le capteur de lumière (3) est disposé dans la face inférieure (1) du rétroviseur extérieur (2).

3. Dispositif selon l'une des revendications 1 ou 2, caractérisé en ce que le capteur de lumière (3) est disposé à l'intérieur d'une douille (4), dont la direction longitudinale est dirigée vers le bas.

4. Dispositif selon la revendication 3, caractérisé en ce que la douille (4) est disposée dans le rétroviseur extérieur (2), avec sa direction longitudinale orientée verticalement.

5. Dispositif selon la revendication 3, caractérisé en ce que la douille (4) est disposée dans le rétroviseur extérieur (2) en s'écartant à partir du véhicule automobile de telle sorte que sa direction longitudinale fait un angle (W) d'environ 20° par rapport à la verticale.

6. Dispositif selon l'une des revendications 3 à 5, caractérisé en ce que le capteur de lumière (3) est disposé de manière à pouvoir coulisser et à être bloqué dans la douille (4).

7. Dispositif selon l'une des revendications 3 à 6, caractérisé en ce que la douille (4) possède une longueur d'environ 40 mm.

8. Dispositif selon l'une des revendications 3 à 7, caractérisé en ce que la douille possède un diamètre d'environ 15 mm.

9. Dispositif selon l'une des revendications 1 à 8, caractérisé en ce que l'ouverture inférieure de la douille (4) ou la face inférieure du capteur de lumière (3) est recouverte par une feuille de polarisation (5), qui est polarisée dans la direction longitudinale de la douille.

10. Dispositif selon l'une des revendications 1 à 9, caractérisé en ce que l'ouverture inférieure de la douille (4) ou la face inférieure du capteur de lumière (3) est recouverte par une fenêtre (6).

11. Dispositif selon la revendication 10, caractérisé en ce que la fenêtre (6) est formée d'un seul tenant en tant que dispositif de retenue à encliquetage pour son insertion dans le rétroviseur extérieur (2).
